# EUROPEAN PATENT APPLICATION

(11) **EP 3 546 398 A1**
(43) Date of publication of application: **02.10.2019**
(21) Application number: 18797721.0
(22) Date of filing: 27.04.2018
(51) Int. Cl.: B65G 33/06, B65G 47/74, B65G 57/03, H01M 4/04, H01M 10/04

(54) **CONVEYANCE DEVICE**

(30) Priority: 10.05.2017 JP 2017094162
(71) Applicant: Hitachi Chemical Company, Ltd., Chiyoda-ku Tokyo 100-6606 (JP)
(72) Inventor: TSUJI Naoki, Tokyo 100-6606 (JP); HOSOI Takeshi, Tokyo 100-6606 (JP); KITAMORI Shigetaka, Tokyo 100-6606 (JP); TOMIYAMA Takahiro, Tokyo 100-6606 (JP)
(74) Representative: Hoffmann Eitle
(86) International application number: PCT/JP2018/017273
(87) International publication number: WO 2018/207673

(57) **Abstract**

A conveyance device includes a conveyor and a stopper. The conveyor conveys an object to be conveyed along a direction crossing a push-out direction of the object while pushing out the object. The stopper is disposed on a side where the object is pushed out with respect to the conveyor, abuts against the object, and prevents the object from being pushed out. The conveyor includes a pair of rotating bodies including a pair of rotating shafts and a pair of spiral parts. The rotating bodies extend in a conveying direction of the object. The spiral parts are spirally wound around the rotating shafts. The spiral parts are wound in directions reverse to each other. The spiral parts support the object in a pair of support regions between the rotating shafts.

## Description

### Technical Field

An aspect of the present invention relates to a conveyance device.

### Background Art

Patent Literature 1 discloses a conveyance device conveying an electrode plate for a lead storage battery. This conveyance device is provided with a pinch roller sending the electrode plate while pinching the electrode plate from above and below between front- and rear-stage unit conveyance devices. The rotation speed of the pinch roller is set so as to exceed the feed speed of the front-stage unit conveyance device. Accordingly, it is possible to quickly pass the electrode plate from the front-stage unit conveyance device to the rear-stage unit conveyance device.

### Citation List

### Patent Literature

Patent Literature 1: Japanese Unexamined Patent Publication No. 2005-276555

### Summary of Invention

### Technical Problem

The electrode plate may be conveyed to an accumulator where a plurality of the electrode plates is accumulated by the conveyance device provided with the pinch roller described above. In this case, the electrode plate sent out by the pinch roller is dropped and accumulated at the accumulator after abutting against a backing plate. A fragile and shape change-prone object to be conveyed such as the electrode plate may be damaged by the impact during the drop or the abutment against the backing plate.

An aspect of the present invention provides a conveyance device capable of suppressing damage to an object to be conveyed.

### Solution to Problem

A conveyance device according to an aspect of the present invention includes a conveyor and a stopper. The conveyor conveys an object to be conveyed along a direction crossing a push-out direction of the object while pushing out the object. The stopper is disposed on a side where the object is pushed out with respect to the conveyor. The stopper abuts against the object, and prevents the object from being pushed out. The conveyor includes a pair of rotating bodies. The pair of rotating bodies includes a pair of rotating shafts and a pair of spiral parts. The pair of rotating bodies extends in a conveying direction of the object. The pair of spiral parts is spirally wound around the pair of rotating shafts. The pair of spiral parts is wound in directions reverse to each other. The pair of spiral parts supports the object in a pair of support regions between the pair of rotating shafts.

In the conveyance device according to an aspect of the present invention, the conveyor includes the pair of rotating bodies. The pair of rotating bodies includes the pair of spiral parts spirally wound around the pair of rotating shafts. The pair of spiral parts is wound in directions reverse to each other. The pair of spiral parts supports the object in the pair of support regions between the pair of rotating shafts. Accordingly, once the pair of rotating bodies rotates, the object is pushed out in a state where the object is supported by the pair of spiral parts. The stopper is disposed on the side where the object is pushed out. Accordingly, the object is conveyed along the stopper while abutting against the stopper in a state where the object is supported by the pair of spiral parts. As a result, damage to the object can be suppressed as compared with a case where the object is dropped without support after abutting against a backing plate.

The conveyance device according to an aspect of the present invention may further include a supplier. The supplier may supply the object to the conveyor from a side opposite to the stopper with respect to the conveyor. In this case, the object can be easily supplied to the conveyor.

In the conveyance device according to an aspect of the present invention, the pair of rotating bodies may rotate once from a reference rotation position each time the supplier supplies the object to the conveyor. In this case, interference between the objects can be avoided. As a result, damage to the object can be further suppressed.

In the conveyance device according to an aspect of the present invention, a pair of end edges on a downstream side in the conveying direction of the pair of spiral parts may be disposed outside the pair of support regions at the reference rotation position. In this case, the object can be sent out from the pair of spiral parts without being caught by the end edges of the pair of spiral parts on the downstream side in the conveying direction.

In the conveyance device according to an aspect of the present invention, the pair of spiral parts may include a pair of support surfaces supporting the object and a pair of projections provided at peripheral edge parts of the pair of support surfaces. In this case, the projection abuts against the object and supports the object. Accordingly, it is possible to convey the object while suppressing the friction between the object and the support surface that is attributable to the rotation of the rotating body.

In the conveyance device according to an aspect of the present invention, the pair of spiral parts may include a pair of support surfaces supporting the object and a pair of projections provided at peripheral edge parts of the pair of support surfaces. The pair of projections may be provided so as to avoid a stopper side crossing region at a pair of upstream side blades of the pair of spiral parts at a first pitch from an upstream side in the conveying direction at the reference rotation position, the stopper side crossing region being a region on the stopper side and one of regions where peripheral edge parts of the pair of support surfaces cross a trajectory for a tip side end part of the object to reach the stopper from the supplier when viewed from the conveying direction. In this case, the projection abuts against the object and supports the object. Accordingly, damage to the object can be further suppressed by, for example, the projections being disposed such that the projections abut against the object while avoiding the damage-prone part of the object. In addition, the projections are provided so as to avoid a region in which it is easy to collide with the tip side end part of the object heading toward the stopper from the supplier. Accordingly, it is possible to suppress damage to the tip side end part of the object attributable to a collision with the projections.

In the conveyance device according to an aspect of the present invention, the pair of projections may be provided from positions that are downstream of the stopper side crossing region in the conveying direction and upstream of a rare end crossing region in the conveying direction at the pair of upstream side blades at the reference rotation position, the rare end crossing region being a region where a rear end of the object at the stopper and peripheral edge parts of the pair of support surfaces crossing each other when viewed from the conveying direction. In this case, it is possible to support the object by means of the projections when the object supplied to the conveyor has reached the stopper. Accordingly, it is possible to convey the object while suppressing the friction between the object and the support surface that is attributable to the rotation of the rotating bodies.

In the conveyance device according to an aspect of the present invention, the pair of projections may be provided up to a pair of end edges on the downstream side in the conveying direction of the pair of spiral parts. In this case, it is possible to convey the object while further suppressing the friction between the object and the support surface that is attributable to the rotation of the rotating bodies.

In the conveyance device according to an aspect of the present invention, the pair of spiral parts may be wound at an equal pitch with a pitch widened at an end edge on an upstream side in the conveying direction. In this case, the object is capable of entering the spiral from the inlet of the spiral even when the object supplied to the pair of spiral parts abuts against the stopper and jumps up due to the resultant reaction.

In the conveyance device according to an aspect of the present invention, radii of the pair of spiral parts may be equal to each other. In this case, rotation control with respect to the pair of spiral parts can be performed with ease.

In the conveyance device according to an aspect of the present invention, radii of the pair of spiral parts may be different from each other. In this case, the distances between the pair of rotating shafts and the stopper can be different from each other in accordance with the shape of the object.

In the conveyance device according to an aspect of the present invention, the stopper may have an opposing surface opposing the conveyor and a pair of guides provided on the opposing surface and extending along the conveying direction. In this case, the object can be guided by the pair of guides.

In the conveyance device according to an aspect of the present invention, the pair of guides may have a gap narrowing toward a downstream side in the conveying direction. In this case, the object can be positioned in the opposing direction of the pair of guides while being conveyed.

In the conveyance device according to an aspect of the present invention, the pair of rotating bodies may rotate such that linear velocities of peripheral edge parts of the pair of spiral parts become equal to each other. In this case, the pair of spiral parts is capable of pushing out the object straight toward the stopper.

In the conveyance device according to an aspect of the present invention, the object may be an electrode plate. In this case, damage to the electrode plate can be suppressed.

### Advantageous Effects of Invention

According to an aspect of the present invention, it is possible to provide a conveyance device capable of suppressing damage to an object to be conveyed.

### Brief Description of Drawings

FIG. 1 is a top view illustrating a conveyance device according to an embodiment.
FIG. 2 is a side view illustrating the conveyance device according to the embodiment.
FIG. 3 is a cross-sectional view illustrating a pair of rotating bodies.
FIG. 4 is a top view for describing a region where a projection is provided.
FIG. 5 is a front view illustrating an accumulator, the rotating body, and a stopper as viewed from a supplier side.
FIG. 6 is a top view for describing the radius of a spiral according to the embodiment.
FIG. 7 is a top view for describing the radius of a spiral according to a first modification example.
FIG. 8 is a top view for describing the radius of a spiral according to a second modification example.

### Description of Embodiments

Hereinafter, an embodiment will be described in detail with reference to accompanying drawings. In the description of the drawings, the same reference numerals are used for the same or equivalent elements and redundant description will be omitted.

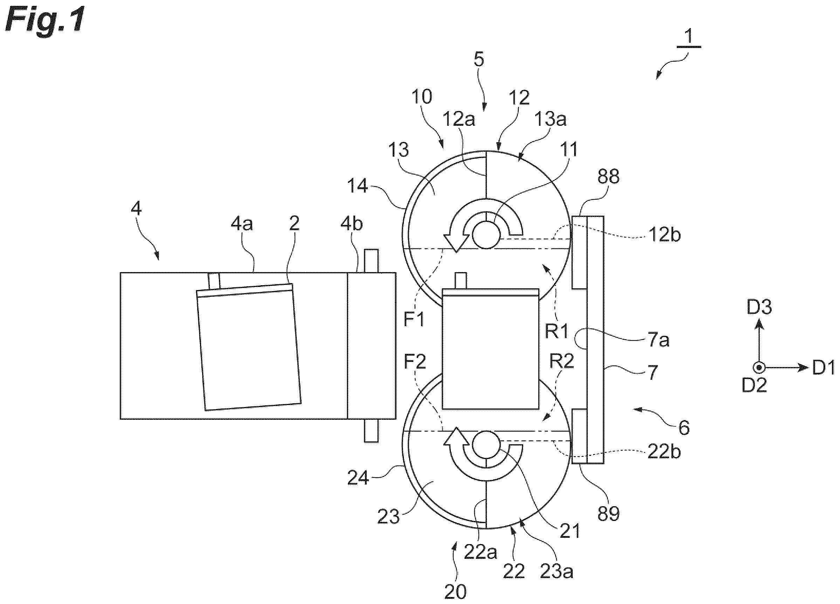

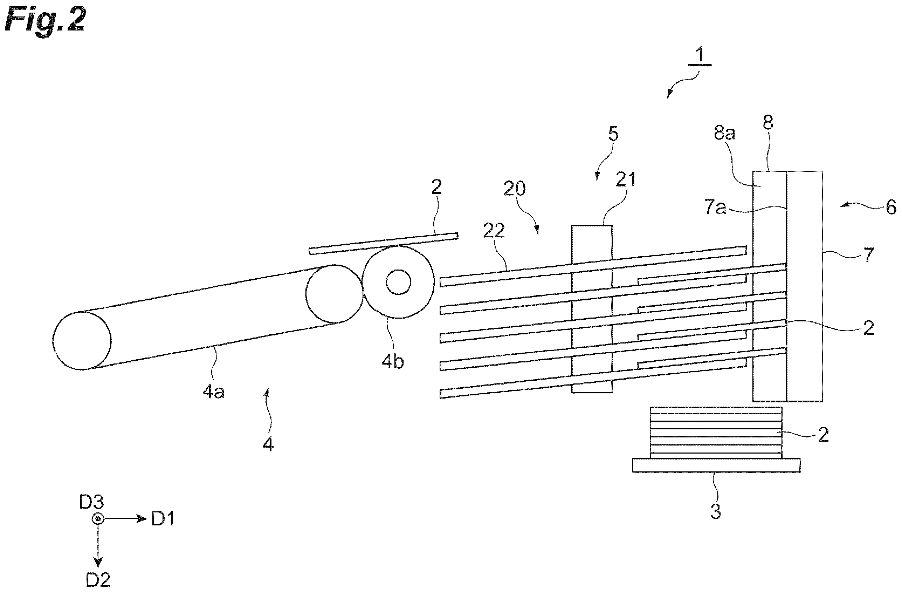

FIG. 1 is a top view illustrating a conveyance device according to the embodiment. FIG. 2 is a side view illustrating the conveyance device according to the embodiment. A conveyance device 1 according to the embodiment illustrated in FIGS. 1 and 2 conveys an electrode plate 2 for a lead storage battery as an object to be conveyed, which is a conveyance object. The object by the conveyance device 1 is not limited to the electrode plate 2. For example, the conveyance device 1 is applied to a process for accumulating the electrode plate 2 in a battery production line and sequentially conveys the electrode plate 2. The conveyed electrode plate is accumulated at an accumulator 3 and then sent to the next process.

The electrode plate 2 is a thin plate-shaped member having a substantially rectangular shape. The electrode plate 2 has a pair of main surfaces opposing each other in a thickness direction. The electrode plate 2 includes a lead alloy-based support body, an electrode material held by the support body, and a current collector part (ear part) provided at the upper end part of the support body. The part between the upper and lower end parts of the support body is formed in, for example, a lattice shape by expand processing. The electrode material is formed by electrode material paste application to the lattice-shaped part of the support body. The electrode material is easily detached from the support body. Paper is attached to the surface of the electrode material so that electrode material detachment is prevented. The upper and lower end parts of the support body are exposed from a current collector. Accordingly, a step is formed at the upper and lower end parts of the electrode plate 2.

The conveyance device 1 is provided with a supplier 4, a conveyor 5, and a stopper 6 arranged in this order. A guide 9 (described later) at the stopper 6 is not illustrated in FIG. 2.

The supplier 4 is disposed on the side opposite to the stopper 6 with respect to the conveyor 5. The supplier 4 supplies the electrode plate 2 to the conveyor 5 from the side opposite to the stopper 6 with respect to the conveyor 5. The supplier 4 includes a belt conveyor 4a and a rotating roller 4b. The belt conveyor 4a conveys the electrode plate 2 toward the conveyor 5. The belt conveyor 4a is disposed such that the conveying-direction downstream side end part of the belt conveyor 4a is higher than the conveying-direction upstream side end part of the belt conveyor 4a and conveys the electrode plate 2 obliquely upward. The rotating roller 4b is disposed between the belt conveyor 4a and the conveyor 5 and adjacent to the conveying-direction downstream side end part of the belt conveyor 4a.

The upper surface of the rotating roller 4b is positioned on a substantially extended line of the upper surface of the belt conveyor 4a. Accordingly, the electrode plate 2 conveyed by the belt conveyor 4a smoothly transfers onto the rotating roller 4b. The rotating roller 4b rotates such that the upper surface side of the rotating roller 4b advances toward the conveyor 5, accelerates the electrode plate 2, and sends out the electrode plate 2 to the conveyor 5. The electrode plate 2 jumps out obliquely upward from the supplier 4. Subsequently, the electrode plate 2 falls parabolically and transfers onto the conveyor 5. As a result, the electrode plate 2 is supplied to the conveyor 5.

The conveyor 5 is disposed between the supplier 4 and the stopper 6. The conveyor 5 conveys the electrode plate 2 along a direction crossing a push-out direction D1 of the electrode plate 2 while pushing out the electrode plate 2 to the stopper 6 side. In the present embodiment, the conveyor 5 conveys the electrode plate 2 downward (vertically downward) while pushing out the electrode plate 2 in a substantially horizontal direction. In other words, the push-out direction D1 of the electrode plate 2 in the present embodiment is a substantially horizontal direction and is a direction on the stopper 6 side with respect to the conveyor 5. A conveying direction D2 of the electrode plate 2 is downward.

The conveyor 5 includes rotating bodies 10 and 20 disposed so as to face each other. An opposing direction D3 of the rotating bodies 10 and 20 is a direction crossing the push-out direction D1 and the conveying direction D2. The rotating bodies 10 and 20 are disposed so as to be capable of supporting the electrode plate 2 supplied from the supplier 4 on both sides of the electrode plate 2 in the opposing direction D3. The rotating bodies 10 and 20 include rotating shafts 11 and 21 extending in the conveying direction D2. In other words, the rotating bodies 10 and 20 are disposed such that the axial direction of the rotating shafts 11 and 21 is parallel to the conveying direction D2.

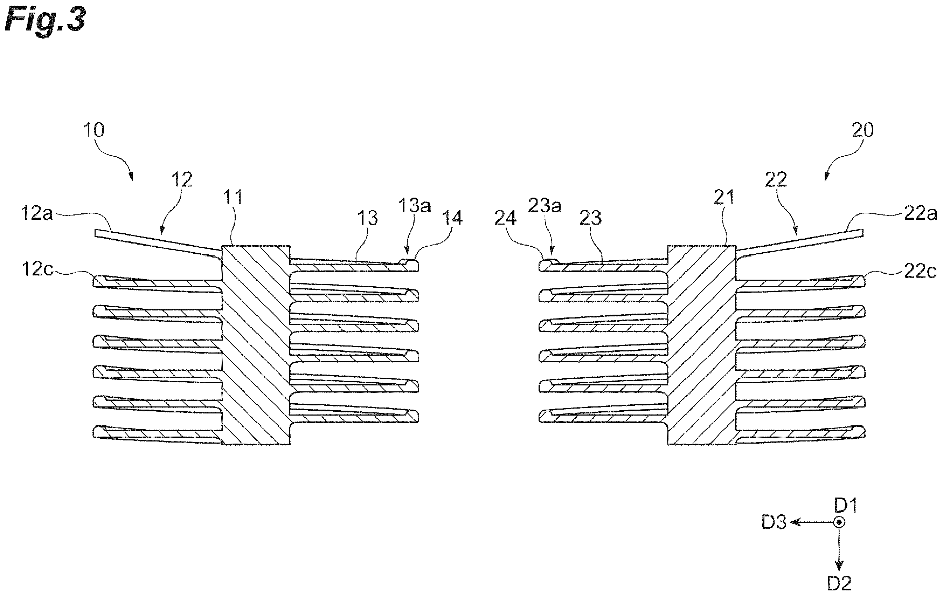

FIG. 3 is a cross-sectional view illustrating the pair of rotating bodies. As illustrated in FIGS. 1 to 3, the rotating bodies 10 and 20 include spiral parts 12 and 22 spirally wound around the rotating shafts 11 and 21. The spiral parts 12 and 22 have a circular shape when viewed from above. The radii of the spiral parts 12 and 22 are equal to each other. The radii of the spiral parts 12 and 22 are the distances from the axes of the rotating shafts 11 and 21 to the peripheral edges of the spiral parts 12 and 22 as viewed from above.

The pair of rotating bodies 10 and 20 rotates such that the linear velocities of peripheral edge parts 13a and 23a (described later) become equal to each other. The rotating bodies 10 and 20 rotate in directions reverse to each other. When viewed from above, the rotating body 10 rotates counterclockwise and the rotating body 20 rotates clockwise. The rotating bodies 10 and 20 are at rest and rotate once (360° rotation) from a reference rotation position each time the supplier 4 supplies the electrode plate 2 to the conveyor 5. The conveyor 5 detects the supply of the electrode plate 2 from the supplier 4 by means of a sensor (not illustrated) or the like.

The spiral parts 12 and 22 include support regions R1 and R2 supporting the electrode plate 2 between the rotating shafts 11 and 21. In other words, the spiral parts 12 and 22 support the electrode plate 2 in the support regions R1 and R2 between the rotating shafts 11 and 21. The electrode plate 2 is guided (regulated) by the rotating shafts 11 and 21 and supported in the support regions R1 and R2. Specifically, the support regions R1 and R2 are regions between a virtual plane F1 and a virtual plane F2 defined as follows. The virtual plane F1 is a virtual plane extending in the push-out direction D1 and the conveying direction D2 and in contact with the tip of the rotating shaft 11 on the rotating shaft 21 side. The virtual plane F2 is a virtual plane parallel to the virtual plane F1 and in contact with the tip of the rotating shaft 21 on the rotating shaft 11 side. Once the rotating bodies 10 and 20 rotate, the support regions R1 and R2 advance from the supplier 4 toward the stopper 6. Accordingly, the electrode plate 2 supported by the support regions R1 and R2 is pushed out toward the stopper 6.

The spiral parts 12 and 22 include end edges 12a and 22a on the upstream side in the conveying direction D2 and end edges 12b and 22b on the downstream side in the conveying direction D2. The end edges 12a and 22a are spiral start positions. The end edges 12b and 22b are spiral end positions. The spiral parts 12 and 22 include a plurality of blades 12c and 22c. The plurality of blades 12c and 22c are divided at every 360° from the end edges 12a and 22a. The plurality of blades 12c and 22c is arranged in the conveying direction D2. The spiral parts 12 and 22 are wound at an equal pitch (for example, 7 mm). At the end edges 12a and 22a, the pitches of the spiral parts 12 and 22 are widened (for example, 18 mm). The pitches of the spiral parts 12 and 22 are gaps between the blades 12c adjacent to each other in the conveying direction D2 at the spiral parts 12 and 22. In other words, the inlet of the spiral is widened at the spiral parts 12 and 22.

The spiral parts 12 and 22 are wound in directions reverse to each other. When viewed from above, the spiral 12 is wound clockwise from the end edge 12a toward the end edge 12b. The spiral 22 is wound counterclockwise from the end edge 22a toward the end edge 22b. In other words, the direction in which the spiral 12 is wound from the end edge 12a toward the end edge 12b is reverse to the direction of rotation of the rotating body 10. The direction in which the spiral 22 is wound from the end edge 22a toward the end edge 22b is reverse to the direction of rotation of the rotating body 20. Once the rotating bodies 10 and 20 rotate, the electrode plate 2 supported by the spiral parts 12 and 22 is conveyed downward while sliding on the spiral parts 12 and 22.

The end edges 12a and 22a are disposed outside the support regions R1 and R2 at the reference rotation position. Specifically, the end edge 12a is disposed on the side opposite to the virtual plane F2 with respect to the virtual plane F1 at the reference rotation position. The end edge 22a is disposed on the side opposite to the virtual plane F1 with respect to the virtual plane F2 at the reference rotation position. The end edges 12a and 22a are substantially parallel to the opposing direction D3 outside the support regions R1 and R2 at the reference rotation position.

The end edges 12b and 22b are disposed outside the support regions R1 and R2 at the reference rotation position. Specifically, the end edge 12b is disposed on the side opposite to the virtual plane F2 with respect to the virtual plane F1 at the reference rotation position. The end edge 22b is disposed on the side opposite to the virtual plane F1 with respect to the virtual plane F2 at the reference rotation position. The end edges 12b and 22b are substantially parallel to the push-out direction D1 on the stopper 6 sides of the rotating shafts 11 and 21 at the reference rotation position.

The spiral parts 12 and 22 include support surfaces 13 and 23 and projections 14 and 24. The support surfaces 13 and 23 oppose the main surface of the electrode plate 2 and support the electrode plate 2. The projections 14 and 24 are provided at the peripheral edge parts 13a and 23a of the support surfaces 13 and 23. The projections 14 and 24 have, for example, a rectangular cross section. The width of the projections 14 and 24 is, for example, 5 mm. The height of the projections 14 and 24 is, for example, 3 mm. The electrode plate 2 is supplied onto the blades 12c and 22c (upstream side blades) of the spiral parts 12 and 22 at the first pitch from the upstream side in the conveying direction D2 at the reference rotation position.

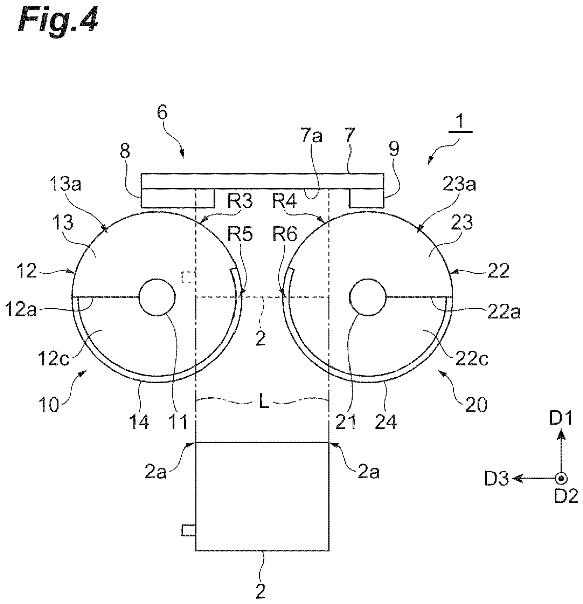

FIG. 4 is a top view for describing the region where the projection is provided. The supplier 4 (see FIG. 1) is not illustrated in FIG. 4. As illustrated in FIG. 4, at the first-pitch blades 12c and 22c at the reference rotation position, the projections 14 and 24 are provided so as to avoid regions R3 and R4 (stopper side crossing regions). The regions R3 and R4 are the regions that are on the stopper 6 side among the four regions where a pair of trajectories L and the peripheral edge parts 13a and 23a cross each other. The trajectories L are trajectories for a pair of tip side end parts 2a of the electrode plate 2 to reach the stopper 6 from the supplier 4 as viewed from the conveying direction D2. The tip side end parts 2a are the end parts of the side positioned at the tip of the electrode plate 2. In the regions R3 and R4, a collision is likely to occur between the projections 14 and 24 and the pair of tip side end parts 2a of the electrode plate 2 heading toward the stopper 6 from the supplier 4.

At the first-pitch blades 12c and 22c at the reference rotation position, the projections 14 and 24 are provided to the end edges 12b and 22b (see FIG. 1) from positions upstream of regions R5 and R6 in the conveying direction D2 and downstream of the regions R3 and R4 in the conveying direction D2. In the regions R5 and R6, the rear end of the electrode plate 2 that has reached the stopper 6 and the peripheral edge parts 13a and 23a cross each other when viewed from the conveying direction D2. In other words, the start positions of the projections 14 and 24 are different from the end edges 12a and 22a, upstream of the regions R5 and R6 in the conveying direction D2, and downstream of the regions R3 and R4 in the conveying direction D2. In other words, the start positions of the projections 14 and 24 are ahead of the regions R5 and R6 in the push-out direction D1 and behind the regions R3 and R4 in the push-out direction D1. Further, in other words, the start position of the projection 14 is ahead of the region R5 in the direction of rotation of the rotating body 10 and behind the region R3 in the direction of rotation of the rotating body 10. The start position of the projection 24 is ahead of the region R6 in the direction of rotation of the rotating body 20 and behind the region R4 in the direction of rotation of the rotating body 20. The end positions of the projections 14 and 24 are the end edges 12b and 22b. Accordingly, the electrode plate 2 remains supported by the projections 14 and 24 from a time when the electrode plate 2 is supplied to the conveyor 5 and reaches the stopper 6 until the conveyor 5 finishes conveying the electrode plate 2.

Aluminum (A5052) and the like can be used as the material of the spiral parts 12 and 22. Aluminum is less prone to corrosion than iron. Aluminum is lighter in weight than stainless steel and thus is capable of suppressing a load on a motor. Aluminum is more wear-resistant than resin.

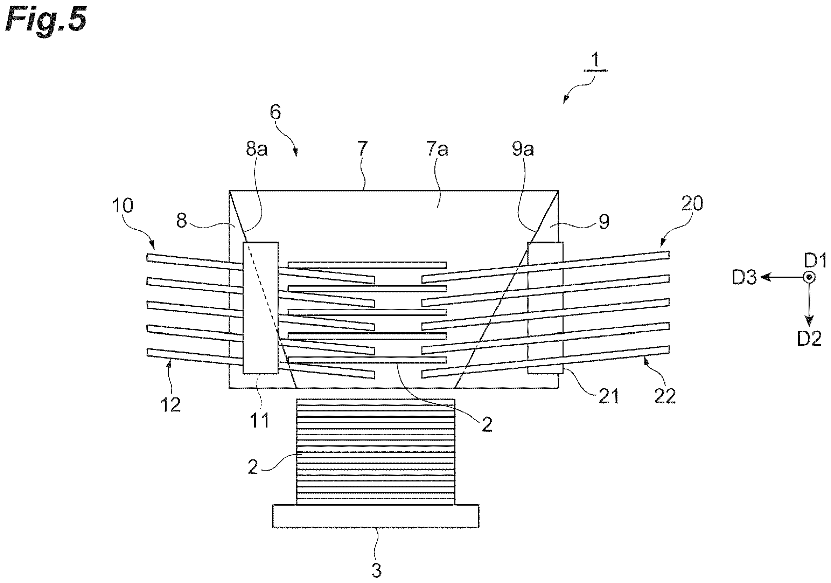

FIG. 5 is a front view illustrating the accumulator, the rotating body, and the stopper as viewed from the supplier side. As illustrated in FIGS. 1, 2, and 5, the stopper 6 is disposed on the side where the electrode plate 2 is pushed out with respect to the conveyor 5. The stopper 6 abuts against the tip of the electrode plate 2 in the push-out direction D1 and prevents the electrode plate 2 from being pushed out from the conveyor 5. The stopper 6 includes a back plate 7, guides 8 and 9.

The back plate 7 has an opposing surface 7a opposing the conveyor 5. The opposing surface 7a has a substantially rectangular shape. The opposing surface 7a abuts against the electrode plate 2 and appropriately determines the position of the tip of the electrode plate 2 in the push-out direction D1. The guides 8 and 9 are provided on the opposing surface 7a so as to face each other in the opposing direction D3 and extend along the conveying direction D2. The guides 8 and 9 include guide surfaces 8a and 9a opposing each other in the opposing direction D3. The gap between the guide surfaces 8a and 9a narrows toward the downstream side in the conveying direction D2. The gap between the guide surfaces 8a and 9a at the downstream side end in the conveying direction D2 coincides with the width of the electrode plate 2. The guide surfaces 8a and 9a appropriately determine the position of the electrode plate 2 in the opposing direction D3.

Disposed directly below the conveyor 5 is the accumulator 3 where a plurality of the electrode plates 2 is accumulated. The accumulator 3 accumulates the electrode plates 2 conveyed and dropped by the conveyor 5. The accumulator 3 includes ascending and descending functions. The accumulator 3 descends by the thickness of the electrode plate 2 each time the electrode plate 2 is conveyed. As a result, the fall distance of the electrode plate 2 is kept constant. The fall distance of the electrode plate 2 is set to, for example, 30 mm or less. Once a predetermined number of the electrode plates 2 are accumulated at the accumulator 3, the accumulated electrode plates 2 are sent to the next process. After the electrode plates 2 are sent out, the accumulator 3 ascends by the thickness of the predetermined number of the electrode plates 2 sent out and repeats the processing for accumulating the electrode plates 2 conveyed by the conveyor 5.

In the conveyance device 1 configured as described above, the electrode plate 2 is first supplied to the conveyor 5 by the supplier 4. At the conveyor 5, the electrode plate 2 is supplied between the rotating shafts 11 and 21 of the rotating bodies 10 and 20. At this time, the rotating bodies 10 and 20 are at rest at the reference rotation position. Once the electrode plate 2 is supplied, the rotating bodies 10 and 20 rotate once from the reference rotation position. As a result, the electrode plate 2 is pushed out toward the stopper 6. The projections 14 and 24 are provided so as to avoid the regions R3 and R4. In the regions R3 and R4, a collision is likely to occur between the projections 14 and 24 and the pair of tip side end parts 2a of the electrode plate 2 heading toward the stopper 6 from the supplier 4. Accordingly, the pair of tip side end parts 2a of the electrode plate 2 reaches the stopper 6 without colliding with the projections 14 and 24. After the rotating bodies 10 and 20 rotate once, the rotating bodies 10 and 20 are at rest at the reference rotation position again.

The electrode plate 2 is conveyed downward while sliding on the support surfaces 13 and 23 in a state where the electrode plate 2 abuts against the stopper 6 and enters the spiral from the inlet of the spiral. Once the next electrode plate 2 is conveyed to the conveyor 5, the rotating bodies 10 and 20 rotate once again. As a result, the electrode plates 2 are sequentially conveyed downward along the support surfaces 13 and 23 in a state where the electrode plates 2 abut against the stopper 6. In other words, the electrode plate 2 is conveyed downward in a state where the tip of the electrode plate 2 in the push-out direction D1 is positioned. Further, the electrode plate 2 is guided (regulated) by the guide surfaces 8a and 9a and positioned in the opposing direction D3. The end edges 12b and 22b are disposed outside the rotating shafts 11 and 21 at the reference rotation position. Accordingly, the electrode plates 2 are accumulated at the accumulator 3 by reaching the end edges 12b and 22b and simultaneously falling downward without being caught by the end edges 12b and 22b. As a result, the electrode plates 2 are conveyed to the accumulator 3 and an assembly of the electrode plates 2 is obtained with the position of the tip in the push-out direction D1 and the position in the opposing direction D3 aligned.

As described above, in the conveyance device 1, the conveyor 5 includes the rotating bodies 10 and 20 including the rotating shafts 11 and 21 and the spiral parts 12 and 22. The spiral parts 12 and 22 are wound in directions reverse to each other and support the electrode plate 2 in the support regions R1 and R2. Accordingly, once the rotating bodies 10 and 20 rotate in directions reverse to each other, the electrode plate 2 is pushed out in a state where the electrode plate 2 is supported by the support regions R1 and R2. The stopper 6 is disposed on the side where the electrode plate 2 is pushed out. Accordingly, the electrode plate 2 is conveyed downward along the opposing surface 7a while abutting against the opposing surface 7a of the stopper 6 in a state where the electrode plate 2 is supported by the support regions R1 and R2. As a result, damage to the electrode plate 2 can be suppressed as compared with a case where the electrode plate 2 is dropped without support after abutting against a backing plate.

The conveyance device 1 is provided with the supplier 4. The supplier 4 supplies the electrode plate 2 to the conveyor 5 from the side opposite to the stopper 6 with respect to the conveyor 5. Accordingly, the electrode plate 2 can be easily supplied to the conveyor 5.

The rotating bodies 10 and 20 rotate once from the reference rotation position each time the supplier 4 supplies the electrode plate 2 to the conveyor 5. As a result, interference between the electrode plates 2 can be avoided. As a result, damage to the electrode plate 2 can be further suppressed.

At the reference rotation position, the end edges 12b and 22b are disposed outside the support regions R1 and R2. Accordingly, the electrode plate 2 can be sent out from the pair of spiral parts 12 and 22 without being caught by the end edges 12b and 22b.

The spiral parts 12 and 22 include the projections 14 and 24 provided on the support surfaces 13 and 23. Accordingly, the projections 14 and 24 abut against the electrode plate 2 and support the electrode plate 2. Accordingly, damage to the electrode plate 2 can be further suppressed by, for example, the projections 14 and 24 being disposed such that the projections 14 and 24 abut the electrode plate 2 while avoiding the damage-prone part of the electrode plate 2. In the present embodiment, a step is formed at the upper and lower end parts of the electrode plate 2 as described above. At this step part, peeling and tearing of the paper covering the electrode material are likely to occur due to friction with the support surfaces 13 and 23. The peeling and tearing of the paper are particularly likely to occur in the place where the support surfaces 13 and 23 rub in the direction in which the step part is climbed over. Accordingly, the projections 14 and 24 may be disposed such that the projections 14 and 24 abut against the electrode plate 2 while avoiding the place.

At the first-pitch blades 12c and 22c at the reference rotation position, the projections 14 and 24 are provided so as to avoid the regions R3 and R4. In the regions R3 and R4, a collision is likely to occur between the projections 14 and 24 and the pair of tip side end parts 2a of the electrode plate 2 heading toward the stopper 6 from the supplier 4. Accordingly, it is possible to suppress damage to the pair of tip side end parts 2a of the electrode plate 2 attributable to a collision with the projections 14 and 24.

At the first-pitch blades 12c and 22c at the reference rotation position, the projections 14 and 24 are provided from positions upstream of the regions R5 and R6 in the conveying direction D2 and downstream of the regions R3 and R4 in the conveying direction D2. Accordingly, it is possible to support the electrode plate 2 by means of the projections 14 and 24 when the electrode plate 2 supplied to the conveyor 5 has reached the stopper 6. Accordingly, it is possible to convey the electrode plate 2 while suppressing the friction between the electrode plate 2 and the support surface 13 that is attributable to the rotation of the rotating bodies 10 and 20. As a result, it is possible to further suppress the peeling and tearing of the paper covering the electrode material of the electrode plate 2.

The projections 14 and 24 are provided up to the end edges 12b and 22b. In other words, the electrode plate 2 remains supported by the projections 14 and 24 from a time when the electrode plate 2 is supplied to the conveyor 5 and reaches the stopper 6 until the conveyor 5 finishes conveying the electrode plate 2. Accordingly, it is possible to convey the electrode plate 2 while further suppressing the friction, which is attributable to the rotation of the rotating bodies 10 and 20, between the electrode plate 2 and the support surface 13. As a result, it is possible to even further suppress the peeling and tearing of the paper covering the electrode material of the electrode plate 2.

The spiral parts 12 and 22 are wound at an equal pitch and the pitch is widened at the end edges 12a and 22a. Accordingly, the electrode plate 2 is capable of entering the spiral from the inlet of the spiral even when the electrode plate 2 supplied to the spiral parts 12 and 22 abuts against the stopper 6 and jumps up due to the resultant reaction.

The radii of the spiral parts 12 and 22 are equal to each other. Accordingly, rotation control with respect to the spiral parts 12 and 22 can be performed with ease. The rotating bodies 10 and 20 rotate such that the linear velocities of the peripheral edge parts 13a and 23a become equal to each other. Accordingly, the spiral parts 12 and 22 are capable of pushing out the electrode plate 2 straight toward the stopper 6.

The stopper 6 includes the guides 8 and 9. Accordingly, the electrode plate 2 can be guided by the guides 8 and 9. The guides 8 and 9 include the guide surfaces 8a and 9a. The gap between the guide surfaces 8a and 9a narrows toward the downstream side in the conveying direction D2. Accordingly, the electrode plate 2 can be positioned in the opposing direction of the guide surfaces 8a and 9a while being conveyed.

The present invention is not limited to the embodiment described above.

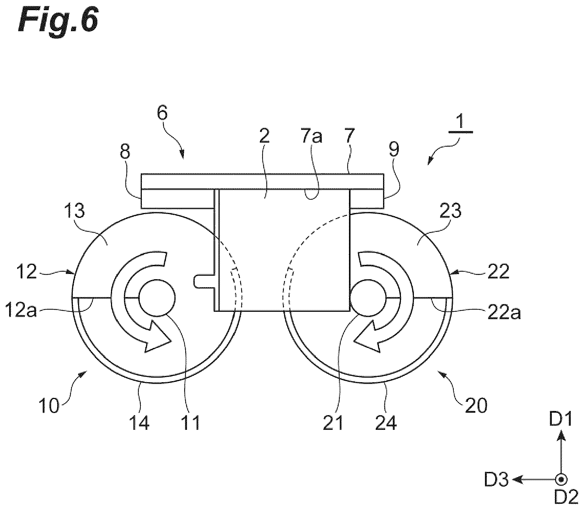

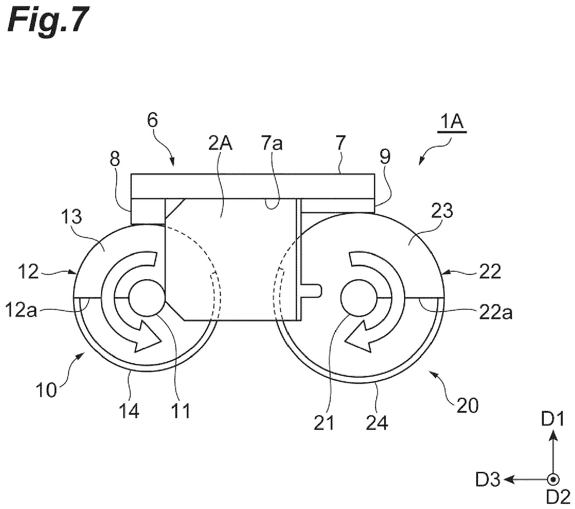

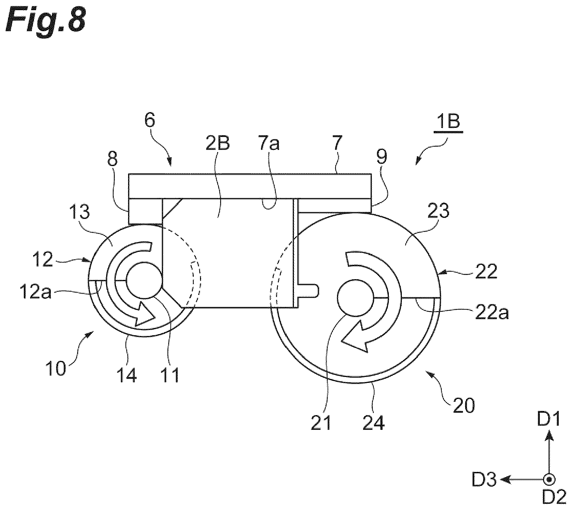

For example, the radii of the spiral parts 12 and 22 may be different from each other. The radii of the spiral parts 12 and 22 will be described with reference to FIGS. 6 to 8. FIG. 6 is a top view for describing the radius of the spiral according to the embodiment. FIG. 7 is a top view for describing the radius of the spiral according to a first modification example. FIG. 8 is a top view for describing the radius of the spiral according to a second modification example. The supplier 4 (see FIG. 1) is not illustrated in FIGS. 6 to 8.

In the conveyance device 1 according to the embodiment illustrated in FIG. 6, the radii of the spiral parts 12 and 22 are equal to each other. In contrast, the radii of the spiral parts 12 and 22 are different from each other in a conveyance device 1A according to the first modification example illustrated in FIG. 7. Specifically, in the conveyance device 1A, the radius of the spiral 12 is shorter than the radius of the spiral 22. The shape of an electrode plate 2A conveyed in the conveyance device 1A is different from the shape of the electrode plate 2 in that the electrode plate 2A has a shape in which the lower end part of the electrode plate 2A is notched. Accordingly, in the conveyance device 1A, the guide 8 disposed on the lower end part side of the electrode plate 2A is formed to be thicker than the guide 9 so as to be capable of abutting against the unnotched part of the lower end part of the electrode plate 2A. As a result, the radius of the spiral 12 is shorter than the radius of the spiral 22.

Also in a conveyance device 1B according to the second modification example illustrated in FIG. 8, the radii of the spiral parts 12 and 22 are different from each other. Specifically, in the conveyance device 1B, the radius of the spiral 12 is shorter than the radius of the spiral 22. The radius of the spiral 12 in the conveyance device 1B is shorter than the radius of the spiral 12 in the conveyance device 1A. The shape of an electrode plate 2B conveyed in the conveyance device 1B is different from the shape of the electrode plate 2 in that the electrode plate 2B has a shape such that the lower end part of the electrode plate 2B is notched, as with the shape of the electrode plate 2A. Accordingly, in the conveyance device 1B, the guide 8 disposed on the lower end part side of the electrode plate 2B is formed to be thicker than the guide 9 so as to be capable of abutting against the unnotched part of the lower end part of the electrode plate 2B as in the conveyance device 1A. As a result, the radius of the spiral 12 is shorter than the radius of the spiral 22. Further, the shape of the electrode plate 2B is different from the shape of the electrode plate 2 also in that the length of the electrode plate 2B in the push-out direction D1 is short. Accordingly, in the conveyance device 1B, the rotating shaft 11 disposed on the lower end part side of the electrode plate 2B is disposed on the stopper 6 side as compared with the rotating shaft 21 so as to be capable of guiding the unnotched part of the lower end part of the electrode plate 2B. As a result, the radius of the spiral 12 is further shorter than the radius of the spiral 22.

As described above, the radii of the spiral parts 12 and 22 are different from each other in the conveyance device 1A and the conveyance device 1B. Accordingly, the distances between the spiral parts 12 and 22 and the stopper 6 (guides 8 and 9 to be specific) can be different from each other in accordance with the shapes of the electrode plate 2A and the electrode plate 2B. In the conveyance device 1A and the conveyance device 1B, the linear velocities of the peripheral edge parts 13a and 23a (see FIG. 3) are equal to each other by the rotation speeds (angular velocities) of the rotating bodies 10 and 20 being different from each other.

The conveyance device 1 may supply the electrode plate 2 by means of an external device without being provided with the supplier 4. In this case, the configuration of the conveyance device 1 can be simplified. The spiral parts 12 and 22 may not include the projections 14 and 24. The spiral parts 12 and 22 may be wound at an equal pitch as a whole. In these cases, manufacturing of the spiral parts 12 and 22 is facilitated. In the embodiment, the rotating bodies 10 and 20 rotate once from the reference rotation position each time the supplier 4 supplies the electrode plate 2 to the conveyor 5. The present invention is not limited thereto and the rotation may be performed once or more. The rotation of the rotating bodies 10 and 20 may be continuous instead of being intermittent. The linear velocities of the peripheral edge parts 13a and 23a (see FIG. 3) may be different from each other. The stopper 6 may not include the guides 8 and 9.

### Reference Signs List

1, 1A, 1B: conveyance device, 2, 2A, 2B: electrode plate (object to be conveyed), 2a: tip side end part, 3: accumulator, 4: supplier, 5: conveyor, 6: stopper, 7: back plate, 7a: opposing surface, 8, 9: guide, 8a, 9a: guide surface, 10, 20: rotating body, 11, 21: rotating shaft, 12, 22: spiral, 12a, 22a: end edge, 12b, 22b: end edge, 12c, 22c: blade, 13, 23: support surface, 13a, 23a: peripheral edge part, 14, 24: projection, D1: push-out direction, D2: conveying direction, L: trajectory, R1, R2: support region, R3, R4: region (stopper side crossing region), R5, R6: region.

## Claims

1. A conveyance device comprising:
a conveyor conveying an object to be conveyed along a direction crossing a push-out direction of the object while pushing out the object; and
a stopper disposed on a side where the object is pushed out with respect to the conveyor, abutting against the object, and preventing the object from being pushed out, wherein
the conveyor includes a pair of rotating bodies including a pair of rotating shafts extending in a conveying direction of the object and a pair of spiral parts spirally wound around the pair of rotating shafts, and
the pair of spiral parts is wound in directions reverse to each other and supports the object in a pair of support regions between the pair of rotating shafts.

2. The conveyance device according to claim 1, further comprising a supplier supplying the object to the conveyor from a side opposite to the stopper with respect to the conveyor.

3. The conveyance device according to claim 2, wherein the pair of rotating bodies rotates once from a reference rotation position each time the supplier supplies the object to the conveyor.

4. The conveyance device according to claim 3, wherein a pair of end edges on a downstream side in the conveying direction of the pair of spiral parts is disposed outside the pair of support regions at the reference rotation position.

5. The conveyance device according to any one of claims 1 to 4, wherein the pair of spiral parts includes a pair of support surfaces supporting the object and a pair of projections provided at peripheral edge parts of the pair of support surfaces.

6. The conveyance device according to claim 3 or 4, wherein
the pair of spiral parts includes a pair of support surfaces supporting the object and a pair of projections provided at peripheral edge parts of the pair of support surfaces, and
the pair of projections is provided so as to avoid a stopper side crossing region at a pair of upstream side blades of the pair of spiral parts at a first pitch from an upstream side in the conveying direction at the reference rotation position, the stopper side crossing region being a region on the stopper side and one of regions where peripheral edge parts of the pair of support surfaces cross a trajectory for a tip side end part of the object to reach the stopper from the supplier when viewed from the conveying direction.

7. The conveyance device according to claim 6, wherein the pair of projections is provided from positions that are downstream of the stopper side crossing region in the conveying direction and upstream of a rare end crossing region in the conveying direction at the pair of upstream side blades at the reference rotation position, the rare end crossing region being a region where a rear end of the object at the stopper and peripheral edge parts of the pair of support surfaces crossing each other when viewed from the conveying direction.

8. The conveyance device according to any one of claims 5 to 7, wherein the pair of projections is provided up to a pair of end edges on a downstream side in the conveying direction of the pair of spiral parts.

9. The conveyance device according to any one of claims 1 to 8, wherein the pair of spiral parts is wound at an equal pitch with a pitch widened at a pair of end edges on an upstream side in the conveying direction of the pair of spiral parts.

10. The conveyance device according to any one of claims 1 to 9, wherein radii of the pair of spiral parts are equal to each other.

11. The conveyance device according to any one of claims 1 to 9, wherein radii of the pair of spiral parts are different from each other.

12. The conveyance device according to any one of claims 1 to 11, wherein the stopper has an opposing surface opposing the conveyor and a pair of guides provided on the opposing surface and extending along the conveying direction.

13. The conveyance device according to claim 12, wherein the pair of guides includes a gap narrowing toward a downstream side in the conveying direction.

14. The conveyance device according to any one of claims 1 to 13, wherein the pair of rotating bodies rotates such that linear velocities of peripheral edge parts of the pair of spiral parts become equal to each other.

15. The conveyance device according to any one of claims 1 to 14, wherein the object is an electrode plate.
